# EUROPÄISCHE PATENTANMELDUNG

(11) **EP 3 685 999 A1**
(43) Veröffentlichungstag der Anmeldung: **29.07.2020**
(21) Anmeldenummer: 19214629.8
(22) Anmeldetag: 10.12.2019
(51) Int. Cl.: B32B 1/08, B32B 5/02, B32B 19/04, B32B 25/08, B32B 25/10, B32B 25/14, B32B 25/16, B32B 25/20, B32B 27/08, B32B 27/12

(54) **UMLAGESCHLAUCH MIT VERBESSERTER ALTERUNGSBESTÄNDIGKEIT**

(30) Priorität: 24.01.2019 DE 102019200896
(71) Anmelder: ContiTech Schlauch GmbH, 30165 Hannover (DE)
(72) Erfinder: Brühne, Klaus - c/o, 30419 Hannover (DE); Schmelter, Klaus - c/o, 30419 Hannover (DE); Sont, Michael - c/o, 30419 Hannover (DE); Döring, Lars - c/o, 30419 Hannover (DE)
(74) Vertreter: Preusser, Andrea

(57) **Zusammenfassung**

Die Erfindung betrifft einen Umlageschlauch, enthaltend wenigstens eine Innenschicht und eine Umlageschicht, mit einer im Vergleich zum Stand der Technik verbesserten Alterungsbeständigkeit bei hohen Temperaturen. Zur Verbesserung der Alterungsbeständigkeit bei hohen Temperaturen, insbesondere im Medium Kühlwasser, enthält der Umlageschlauch eine Innenschicht (1) auf Basis wenigstens eines Ethylen-Propylen-Dien-Kautschuks (EPDM) oder wenigstens eines Ethylen-Propylen-Kautschuks (EPM) oder eines Blends aus wenigstens einem Ethylen-Propylen-Dien-Kautschuk (EPDM) und wenigstens einem Ethylen-Propylen-Kautschuk (EPM).

Der Umlageschlauch ist insbesondere ein Kühlwasserschlauch.

## Beschreibung

Die Erfindung betrifft einen Umlageschlauch, enthaltend wenigstens eine Innenschicht und eine Umlageschicht, mit einer im Vergleich zum Stand der Technik verbesserten Alterungsbeständigkeit bei hohen Temperaturen.

Gattungsgemäße Umlageschläuche sind zum Beispiel aus WO2014/019796A2 oder aus WO 2017/092894A1 bekannt. Es handelt sich um flexible Schläuche, die mit einer äußeren Lage aus Festigkeitsträgern, der so genannten Umlage, versehen sind. Innerhalb der umhüllenden äußeren Lage können derartige Schläuche mehrere Lagen oder Schichten aus unterschiedlichen, Elastomeren, thermoplastischen Elastomeren oder Thermoplasten und Festigkeitsträgern aufweisen. Die äußere Lage aus Festigkeitsträgern kann als Geflecht, Gestrick, Gewirke, Gewebe oder dergleichen vorliegen.
In WO2014/019796A2 wird beschrieben, dass gattungsgemäße Schläuche mit einer Innenschicht aus Fluor-Kautschuk (FKM) oder einer Innenschicht aus Ethylen-Acrylat-Kautschuk (AEM) eine Temperaturbeständigkeit von größer oder gleich 150°C aufweisen. Die dort beschriebenen Schläuche werden als Schlauch für die Turboladerschmierung, für Kompressor-Schläuche, als Schlauch für Dieselpartikelfiltersysteme, für Kraftstoff- oder Ölschläuche verwendet. Umlageschläuche finden mittlerweile aber auch als Kühlwasserschläuche Verwendung, wo sie ebenso im Medium Kühlwasser eine gute Temperatur- und Alterungsbeständigkeit aufweisen müssen. Hierzu wurden bisher Innenschichten aus Silikonkautschuk oder Fluorkautschuk eingesetzt und / oder es musste ein zusätzlicher Umlagenschutz, wie bspw. in WO 2017/092894A1 beschrieben verwendet werden. Kühlwasser gibt es in vielen verschiedenen Zusammensetzungen. Um Verschmutzungen von Anlagen durch Bestandteile des Kühlwassers zu verhindern, werden z. Bsp. deionisiertes Wasser oder diverse Zusätze, wie bspw. Mittel zur Verhinderung des Wachstums von Mikroorganismen, verwendet. Oft wird dem Kühlwasser in geschlossenen Kühlkreisläufen, wie sie im Kraftfahrzeug zu finden sind, Frostschutzmittel zugesetzt, um ein Einfrieren im Winter zu verhindern. Eines der bekanntesten Frostschutzmittel ist bspw. Glysantin® der Fa. BASF.
Innenschichten aus Silikonkautschuk oder Fluorkautschuk haben sich in einem derartigen Kühlwassermedium, insbesondere bei Vorhandensein von Frostschutzmitteln, bei Temperaturen oberhalb 150°C als nicht beständig erwiesen und das Aufbringen eines zusätzlichen Umlageschutzes bedeutet zusätzlichen Aufwand im Herstellverfahren.

Im Rahmen einer Weiterentwicklung zu WO2014/019796A2 und WO 2017/ 092894A1 besteht die Aufgabe der Erfindung somit darin, einen Umlageschlauch bereitzustellen, der bei Temperaturen von mehr als 150°C eine gute Alterungsbeständigkeit im Kühlwassermedium aufweist und somit unter anderem als Kühlwasserschlauch eingesetzt werden kann.

Gelöst wird diese Aufgabe dadurch, dass der Umlagenschlauch eine Innenschicht auf Basis wenigstens eines Ethylen-Propylen-Dien-Kautschuks (EPDM) oder wenigstens eines Ethylen-Propylen-Kautschuks (EPM) oder eines Blends aus wenigstens einem Ethylen-Propylen-Dien-Kautschuk (EPDM) und wenigstens einem Ethylen-Propylen-Kautschuk (EPM) enthält.

Überraschenderweise hat sich gezeigt, dass sich durch die Verwendung einer Innenschicht auf der Basis wenigstens eines Ethylen-Propylen-Dien-Kautschuks (EPDM) oder wenigstens eines Ethylen-Propylen-Kautschuks (EPM) oder eines Blends aus wenigstens einem Ethylen-Propylen-Dien-Kautschuk (EPDM) und wenigstens einem Ethylen-Propylen-Kautschuk (EPM) eine deutliche Verbesserung der Alterungsbeständigkeit bei Temperaturen oberhalb von 150°C im Medium Kühlwasser ergibt.
Dies war umso überraschender, da bisher immer davon ausgegangen wurde, dass sowohl Fluorkautschuk als auch Silikonkautschuk die bessere Temperatur- und Medienbeständigkeit aufweisen. Dies trifft nach der vorliegenden Erfindung überraschend aber nicht für die Verwendung im Medium Kühlwasser zu.

Erfindungsgemäß enthält die Innenschicht wenigstens einen Ethylen-Propylen-Dien-Kautschuk (EPDM) oder wenigstens einen Ethylen-Propylen-Kautschuk (EPM) oder einen Blend aus wenigstens einem Ethylen-Propylen-Dien-Kautschuk (EPDM) und wenigstens einem Ethylen-Propylen-Kautschuk (EPM) als Basis. Gemeint ist damit, dass die Innenschicht des Umlageschlauchs aus einer Kautschukmischung besteht, welche 100 phr wenigstens eines Ethylen-Propylen-Dien-Kautschuks (EPDM) oder 100 phr wenigstens eines Ethylen-Propylen-Kautschuks (EPM) oder 100 phr eines Blends aus wenigstens einem Ethylen-Propylen-Dien-Kautschuk (EPDM) und wenigstens einem Ethylen-Propylen-Kautschuk (EPM) enthält.
Besonders gute Ergebnisse hinsichtlich der Alterungsbeständigkeit werden erzielt, wenn die Innenschicht einen Blend aus EPDM und EPM enthält. Besonders bevorzugt beträgt die Zusammensetzung des Blends hierbei 50 bis 90 phr EPM und 50 bis 10 phr EPDM, ganz besonders bevorzugt 70 bis 90 phr EPM und 30 bis 10 phr EPDM. Es versteht sich von selbst, dass bei einem Blend die Gesamtmenge an Kautschuk immer 100 phr betragen muss.

Die Kautschukmischung der Innenschicht kann noch weitere Inhaltstoffe, wie bspw. Füllstoffe, Weichmacher, Alterungsschutzmittel, Metalloxide, Verarbeitungshilfsmittel, Coagenzien, etc. enthalten. Bevorzugt wird die Kautschukmischung der Innenschicht peroxidisch vernetzt, mit den der fachkundigen Person bekannten Peroxiden. Alternativ sind auch eine Elektronenstrahl-Vernetzung, Harz-Vernetzung oder eine Hydrosilylierung zur Vernetzung möglich.

Wie bereits eingangs erwähnt können derartige Schläuche mehrere Lagen oder Schichten aus unterschiedlichen, Elastomeren, thermoplastischen Elastomeren oder Thermoplasten enthalten. Ebenso können neben der Umlage noch eine oder mehrere eingebettete Festigkeitsträgerlagen vorhanden sein. Hierfür können alle der fachkundigen Person bekannten Festigkeitsträgerwerkstoffe verwendet werden.
Grundsätzlich können für alle weiteren Schichten außer der Innenschicht alle Elastomere, thermoplastische Elastomere oder Thermoplaste eingesetzt werden. Bevorzugt sind Elastomere, thermoplastische Elastomere oder Thermoplaste, die eine Temperaturbeständigkeit von größer oder gleich 150°C aufweisen.
Die Elastomere sind beispielsweise ausgewählt aus der Gruppe, bestehend aus: (teil)hydrierter Nitrilkautschuk (HNBR) und / oder Fluor-Kautschuk (FKM) und / oder
Ethylen-Vinylacetat-Kautschuk (EVA) und / oder Acrylat-Kautschuk (ACM) und / oder Ethylen-Acrylat-Kautschuk (AEM) und / oder Silikonkautschuk (MQ, VMQ, PVMQ, FVMQ) und / oder Fluorierter Methylsilikonkautschuk (MFQ) und / oder Perfluorinierter Propylen-Kautschuk (FFPM) und / oder Perfluorcarbon-Kautschuk (FFKM) und / oder Ethylen-Propylen-Dien-Kautschuk (EPDM) und /oder ein Copolymer aus Tetrafluorethylen und Propylen (TFE-P).
Die genannten Elastomere können alleine oder im Verschnitt mit wenigstens zwei Elastomeren eingesetzt werden.

Als Material für die Festigkeitsträger der Umlage können alle der fachkundigen Person bekannten natürlichen und synthetischen Materialien verwendet werden. Als synthetische Materialien kommen insbesondere synthetische Polymere, wie bspw. Polyacrylnitril, Polypropylen, Polyester, Polyamid, Polyurethan, Polyphenylensulfid, Polyoxadiazol, Aramide, wie p-Aramid, m-Aramid oder co-poly para Aramid, Polyimid, Polyetherimid, Polyetheretherketon, Polyethylen-2,6-naphthalat, Polyphenylen, Polyphenylenoxid, Polyphenylenether, Polybenzoxazole, Poly(p-phenylen-2,6-benzobisoxazol), Polyvenylalkohol in Frage. Bei den natürlichen Materialien kann es sich um Steinwolle oder Asbest oder um Baumwolle, Flachs oder Hanf, oder um Wolle, Cellulose, Modal oder Seide, handeln.
Anorganische Materialien wie Glas, Keramik, Kohlenstoff (Carbon), Metall oder Gestein, wie bspw. Basalt, sind ebenso denkbar.
Die genannten Werkstoffe können hierbei alleine oder in Kombination, z.B. als Hybrid oder als Mischgeflecht, verwendet werden.
Insbesondere für einen Kühlwasserschlauch sollte das Festigkeitsträgermaterial die Anforderung einer möglichst hohen Wasser- und Kühlmittelbeständigkeit und einer hohen Wärmebeständigkeit erfüllen. Daher sind hierfür synthetische organische Polymere, wie bspw. Polyphenylensulfid, Polyoxadiazol, Aramide, wie p-Aramid (bspw. PPTA), m-Aramid (bspw. MPIA) oder co-poly para Aramid, Polyphenylenether, Polyetherimid, Polyetheretherketon, Poly(p-phenylen-2,6-benzobisoxazol), oder auch Carbonfasern besonders gut geeignet.

Der erfindungsgemäße Umlageschlauch kann zusätzlich mit einer biegesteifen Verstärkung, wie sie bspw. aus EP 202 436 A2 für Schläuche mit einer (elastomeren) Deckschicht bekannt sind, ausgerüstet sein. Bei der biegesteifen Verstärkung handelt es sich vorzugsweise um Monofile, auch als Monofilamente bezeichnet, welche gleich- oder gegensinnig um bzw. in die Umlage gewickelt sind. Die Monofile können dabei auch gekreuzt gewickelt sein. Die Monofile können aus einem metallischen, wie bspw. Edelstahl, oder einem nichtmetallischen Werkstoff, wie bspw. PPS oder POD, aufgebaut sein. D.h. das Material der biegesteifen Verstärkung kann hierbei gleich oder verschieden vom Material der Umlage sein.

Die Umlage wird als textiles Flächengebilde in Form von Geflecht, Cord, Gestrick, Gewirk, Gewebe, Vlies oder Gelege aufgebracht, wobei vorzugsweise die Aufbringung als Geflecht erfolgt. Die Umlageschicht kann dabei einlagig oder mehrlagig ausgebildet sein. Bevorzugt hat die Umlageschicht 1 bis 5 Lagen, besonders bevorzugt 1 bis 3 Lagen und ganz besonders bevorzugt 1 bis 2 Lagen.

Der erfindungsgemäße Umlageschlauch findet insbesondere Verwendung als Turboladerkühlungsschlauch, Kompressorschlauch, SCR-Umlageschlauch, luftführender Schlauch, Niederdruck-Bremsschlauch oder Kühlwasserschlauch. Bevorzugt handelt es sich aber aufgrund der eingangs genannten Gründe um einen Kühlwasserschlauch.

Die Erfindung soll nun anhand von Vergleichs- und Ausführungsbeispielen, die in den Tabellen 1, 2 und 3 zusammengefasst sind, näher erläutert werden.
Für alle Beispiele wurden Prüfkörper im Labormaßstab hergestellt. Die Tabellen unterscheiden sich jeweils in der Temperatur der Alterungsprüfung.

### Schematische Zeichnungen

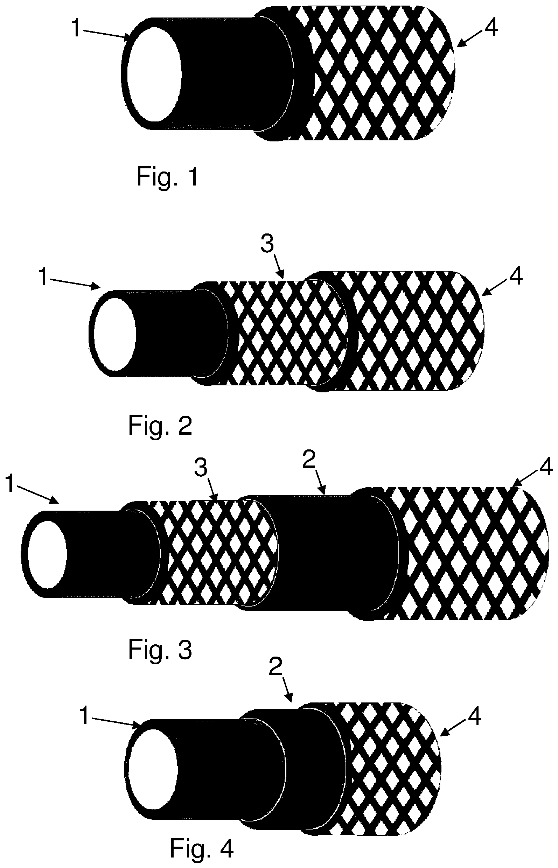

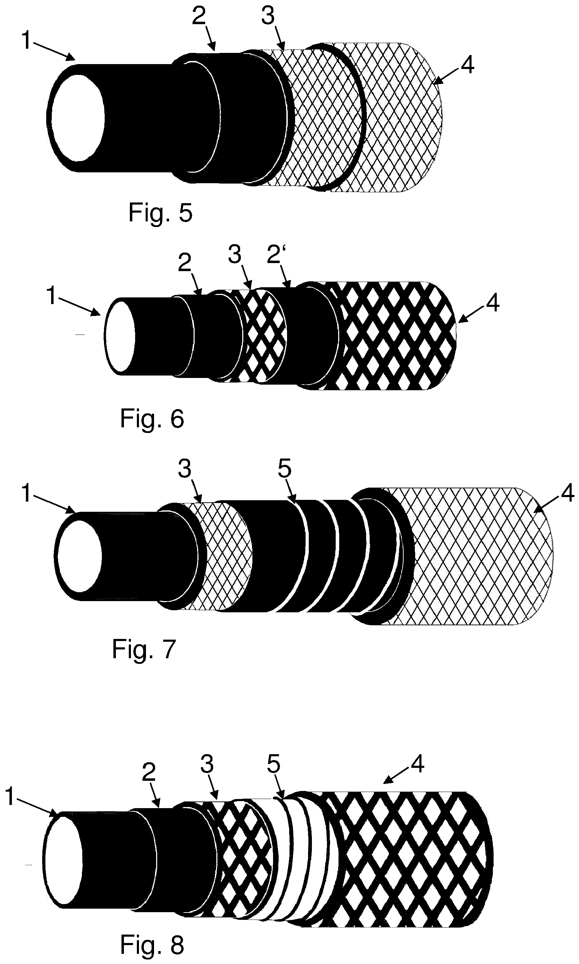

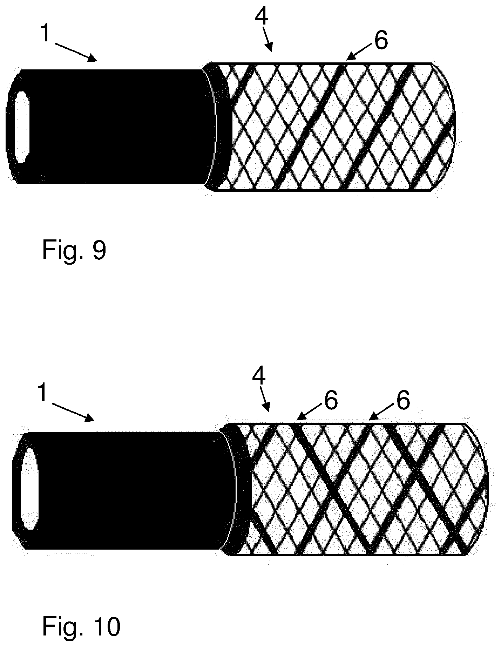

Die Figuren 1 bis 10 zeigen jeweils unterschiedliche Schlauchaufbauten:
- Fig. 1: zeigt einen Umlageschlauch aufgebaut aus: Erfindungsgemäßer Innenschicht 1, Umlage 4
- Fig. 2: zeigt einen Umlageschlauch aufgebaut aus: Erfindungsgemäßer Innenschicht 1, eingebettete Festigkeitsträgerlage 3, Umlage 4
- Fig. 3: zeigt einen Umlageschlauch aufgebaut aus: Erfindungsgemäßer Innenschicht 1, eingebettete Festigkeitsträgerlage 3, Zwischenschicht 2, Umlage 4
- Fig. 4: zeigt einen Umlageschlauch aufgebaut aus: Erfindungsgemäßer Innenschicht 1, Zwischenschicht 2, Umlage 4
- Fig. 5: zeigt einen Umlageschlauch aufgebaut aus: Erfindungsgemäßer Innenschicht 1, Zwischenschicht 2, eingebettete Festigkeitsträgerlage 3, Umlage 4
- Fig. 6: zeigt einen Umlageschlauch aufgebaut aus: Erfindungsgemäßer Innenschicht 1, Zwischenschicht 2, eingebettete Festigkeitsträgerlage 3, Zwischenschicht 2', Umlage 4
- Fig. 7: zeigt einen Umlageschlauch aufgebaut aus: Erfindungsgemäßer Innenschicht 1, eingebettete Festigkeitsträgerlage 3, Wendel 5, Umlage 4 Der Wendel 5 kann zusätzlich in einer Elastomermatrix eingebettet werden. Als Alternative zur Einbringung der Wendel 5 zwischen zwei Festigkeitsträgerlagen 3, 3' kann zur Verbesserung der Knickempfindlichkeit bei gleichzeitiger Erhöhung der Unterdruckbeständigkeit eine Monofile Verstärkung Verwendung finden (siehe auch Fig. 9 und Fig. 10).
- Fig. 8: zeigt einen Umlageschlauch aufgebaut aus: Erfindungsgemäßer Innenschicht 1, Zwischenschicht 2, eingebettete Festigkeitsträgerlage 3, Wendel 5, Umlage 4 Der Wendel 5 kann zusätzlich in einer Elastomermatrix eingebettet werden. Als Alternative zur Einbringung der Wendel 5 zwischen zwei Festigkeitsträgerlagen 3, 3' kann zur Verbesserung der Knickempfindlichkeit bei gleichzeitiger Erhöhung der Unterdruckbeständigkeit eine Monofile Verstärkung Verwendung finden (siehe auch Fig. 9 und Fig. 10).
- Fig. 9: zeigt einen Umlageschlauch aufgebaut aus: Erfindungsgemäßer Innenschicht 1 und Umlage 4 Die Umlage 4 ist hierbei zusätzlich mit integrierten Monofilamenten (fette Linien) als biegesteife Verstärkung 6, wie sie aus EP 202 436 A2 bekannt ist, ausgestattet.
- Fig. 10: zeigt einen Umlageschlauch aufgebaut aus: Erfindungsgemäßer Innenschicht 1 und Umlage 4 Die Umlage 4 ist hierbei zusätzlich mit integrierten kreuzweise gewickelten Monofilamenten (fette Linien) als biegesteife Verstärkung 6, wie sie aus EP 202 436 A2 bekannt ist, ausgestattet.

### Bezugszeichenliste

- 1: Innenschicht
- 2, 2': Zwischenschicht
- 3, 3': eingebettete Festigkeitsträgerschicht
- 4: äußere Festigkeitsträgerschicht (Umlage), einlagig oder mehrlagig
- 5: Wendel
- 6: biegesteife Verstärkung (Monofilamente)

## Patentansprüche

1. Mehrschichtiger Umlageschlauch enthaltend wenigstens eine Innenschicht (1) und eine Umlageschicht (2), **dadurch gekennzeichnet, dass** der Umlageschlauch eine Innenschicht (1) auf Basis wenigstens eines Ethylen-Propylen-Dien-Kautschuks (EPDM) oder wenigstens eines Ethylen-Propylen-Kautschuks (EPM) oder eines Blends aus wenigstens einem Ethylen-Propylen-Dien-Kautschuk (EPDM) und wenigstens einem Ethylen-Propylen-Kautschuk (EPM) enthält.

2. Mehrschichtiger Umlageschlauch gemäß Anspruch 1, **dadurch gekennzeichnet, dass** die Innenschicht (1) einen Blend aus wenigstens einem Ethylen-Propylen-Dien-Kautschuk (EPDM) und wenigstens einem Ethylen-Propylen-Kautschuk (EPM) enthält.

3. Mehrschichtiger Umlageschlauch gemäß Anspruch 2, **dadurch gekennzeichnet, dass** der Blend aus 50 bis 90 phr EPM und 10 bis 50 phr EPDM besteht.

4. Mehrschichtiger Umlageschlauch gemäß Anspruch 3, **dadurch gekennzeichnet, dass** der Blend aus 70 bis 90 phr EPM und 10 bis 30 phr EPDM besteht.

5. Mehrschichtiger Umlageschlauch gemäß einem der Ansprüche 1 bis 4, **dadurch gekennzeichnet, dass** er ein Kühlwasserschlauch ist.

6. Mehrschichtiger Umlageschlauch gemäß einem der Ansprüche 1 bis 4, **dadurch gekennzeichnet, dass** er ein SCR-Umlageschlauch ist.
